# EUROPEAN PATENT SPECIFICATION

(11) **EP 0 334 472 B1**
(45) Date of publication and mention of the grant of the patent: **24.05.1995**
(21) Application number: 89301144.5
(22) Date of filing: 06.02.1989
(51) Int. Cl.: G06K 9/34

(54) **Methods of detecting character strings**
Verfahren zur Zeichenkettenermittlung
Méthodes pour détecter des chaînes de caractères

(30) Priority: 25.03.1988 JP 69969/88
(43) Date of publication of application: 27.09.1989
(73) Proprietor: International Business Machines Corporation, Armonk, N.Y. 10504 (US)
(72) Inventor: Amano, Tomio, Midori-ku Yokohama-shi Kanagawa-ken (JP)
(74) Representative: Burt, Roger James, Dr.

(56) References cited:
- DE-A- 3 414 455
- US-A- 3 805 237
- IBM J. RES. DEVELOP vol. 26, no. 6, November 1982, pages 647 - 656; WONG P. ET AL.: 'Document analysis system'

## Description

This invention is related to a method for detecting character strings in a document image containing figures and illustrations.

Recently, because it has become possible for various documents, such as manuals and design drawings, to be electronically stored in an office, by an optical filing system or the like, and transmitted by facsimile, the number of so-called paperless offices is now increasing. However, at present, a document is treated as a collection of monochromatic image information, and if one wishes to perform any processing that is more advanced than cutting-and-pasting images and to use more effective storage and transmission processes, it will be necessary to structure image information, including its conversion to multi-media information including character codes and graphic commands. In the structuring of image information, a frequent initial operation that is carried out is the extraction of data segments which comprise only character strings from an image which includes figures and pictures as well as character strings. This involves seeking the position of a rectangle framing the character strings in the image.

In the automatic screen entry system for CAD/CAM, it is necessary for the character strings and line diagrams in a drawing to be identified after they are mutually separated. In the data processing involved in producing a newspaper, magazine or the like, which includes dividing an image into regions such as character regions, diagrams and photographs, information on whether or not character strings exist in a certain region is very useful. In addition, when using optical character readers OCRs for data input, which has so far been restricted to inputting documents having only printed characters, a function is being sought which automatically ignores logotypes, signatures, underlines and the like and recognises only characters.

However, since the character extracting process handles a whole image, it is a process which requires considerable time. In addition, since recognition of printed alphanumeric characters is presently performed by software on a personal computer, it is also desirable for the character extraction to be provided on a personal computer, and a high-speed character extraction system is required. The process of this character extraction can be divided into the following two steps'
1) Detecting the character strings in an image; and
2) Determining the accurate position and size of the framing rectangles of the character strings.

The character string detection of step 1 involves scanning the image to obtain general information on the position data of the character strings. Step 2, which follows, takes relatively little time to execute because the process has available to it the information, such as coordinates and sizes obtained in step 1. Therefore, it is the character string detection process of step 1 which burdens the CPU, and a high-speed character string detection system requiring no expensive specialised hardware or host computer is essential so that applications which include structuring image information may spread into offices.

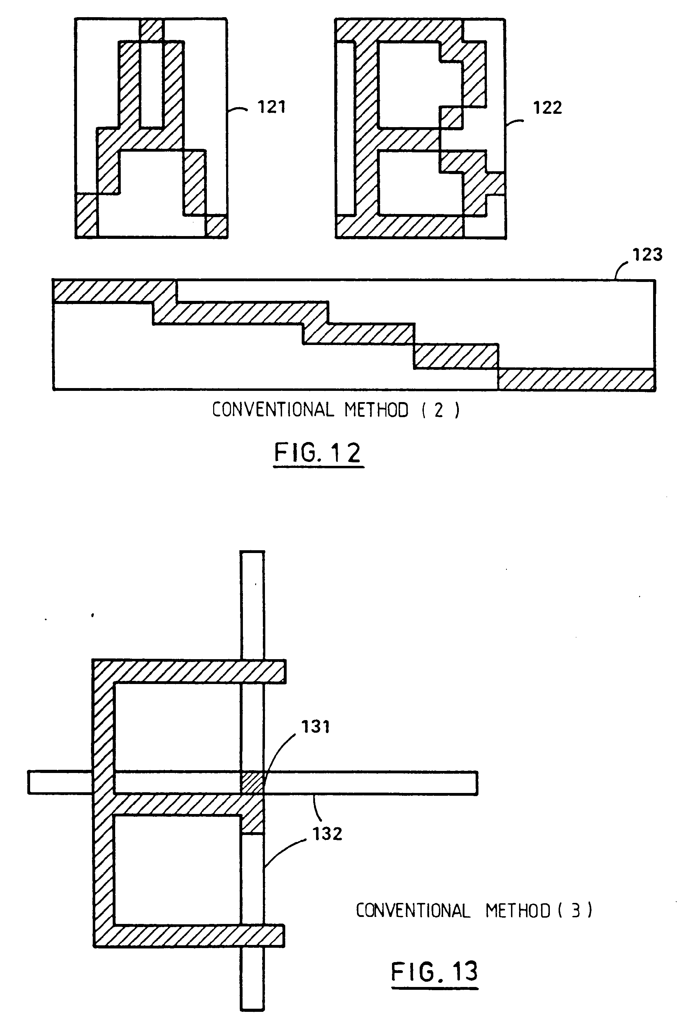

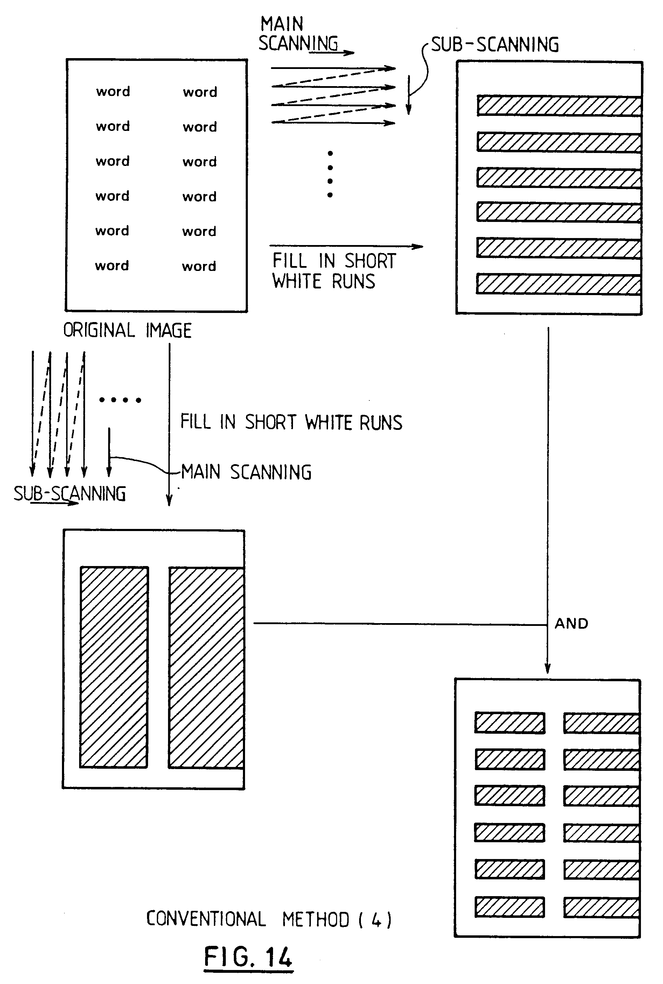

The known conventional character string detection methods can be summarised as follows - though that which may be learned specifically from the drawings of the documents referred to is omitted:
(1) Methods which use histograms
   An image is scanned to count the number of the black pixels and character strings are detected from their histogram.
   This is a method which is most frequently used for an image comprising only characters. For an image including figures and characters, a method has been proposed which hunts for regions containing only character strings while changing the range to be scanned several times and preparing multiple histograms . The following article is an example of the references describing this method.
   Masuda, Hagita, Akiyama; "Approach to Smart Document Reader System"; Proc. Conference CVPR, San Francisco, 1985; pp. 550-557
(2) Methods which pay attention to the size of a figure.
   As shown in Fig. 12, connected black pixels are traced to seek rectangles (121, 122, 123) framing the connected regions. Since the connected black pixel regions of characters are smaller than the connected black pixel regions of other figures, the characters can be identified from the size of the framing rectangles. This is a method which is used in many systems. The following publication is an example of the references describing this method.
   Rosenfeld, Kak; "Digital Picture Processing"; Academic Press, New York, 1976
(3) Methods which pay attention to the complexity of a figure.
   The complexity of a figure is examined in the neighbourhood of the black pixels to determine if they are pixels constituting a character, and a region which shows a concentration of black pixels is considered to be a character region. In cases where neighbourhood line density is used as a measure of the complexity of a figure, for example, for each pixel in the image, a scan is made in each of four directions - up, down, left and right - centred on the currently examined pixel to count the number of times there is a pixel state change from white to black, and the data so obtained is used to determine the complexity.
   Using Fig. 13 as a basis for explanation, scanning is performed in the region 132, centred around a black pixel 131 to which attention is currently being paid. White changes to black three times in the scanning range, so the neighbourhood line density is 3. A black pixel having a high neighbourhood line density is judged to be a pixel which constitutes a character. The following article is an example of the references describing this method.
   Kubota, Iwaki, Arakawa; "Document Understanding System"; 7th 1CPR, Montreal, 1984; pp. 612-614
(4) Methods of detecting character strings from a preprocessed image.
   An image is prepared wherein the white pixels between closely spaced black pixel regions are replaced by black pixels as a result of which the characters in a character string are connected together to become a single black pixel region and from the shape and size of the region having the black pixels connected in the image, it is determined whether or not they signify character strings. Run-length smearing is often used as the method of replacing white pixels with black pixels. Run-length smearing is a process wherein, as shown in Fig. 14, first an image is raster-scanned to provide an image in which all the white runs except those longer than a certain length are replaced by black pixels, then the directions of the main scanning and sub-scanning are changed and a second raster scan is performed to achieve a similar processing. Thereafter the two images are ANDed. The following article is an example of the references describing this method.
   Wong, Casey, Wahl; "Document Analysis System; IBM J. RES. DEVELOP; Vol. 26, No. 6, pp. 647-656; 1982/11

In addition, there are also systems which use a combination of these methods and others which feed back the results of segmentation and recognition of the respective characters to correct the first result.

The problems of the conventional methods in terms of the speed and detection precision include the following matters:

The speed of character string detection depends heavily both on the number of times the image is accessed and the size of the data unit used to process the image. Preferably, the access rate is once per raster scan and the data unit used in processing the image is the same as the unit of data processing in a general-purpose processor - a byte (8 bits) or a word (16 bits).

In the method (1), a plurality of scans are required to segment the regions of figures and pictures, and this plurality increases as the number of the regions of figures and pictures in the image increases.

In the method (2), the framing rectangle of a connected region can be obtained from one scan but a complex data structure will be required to store the intermediate result.

In the method (3), in addition to the fact that the image needs to be scanned once every time a black pixel is found, in the case of neighbourhood line density determination, access occurs up, down, left and right from the pixel .

In the method (4), scanning is required three times in the preprocessing and one time in checking the connected region, a total of four times.

Regarding the size of the data unit that can be used for processing, processing on the basis of byte or word by table look-up is available in the method (1). In methods (2) and (3), when scanning the image, it is necessary to check every pixel location to determine whether it is white or black. In the method (4), byte-by-byte or word-by-word processing is available for preprocessing, but the checking process of the connected region is performed pixel by pixel.

Thus, in methods (2), (3) and (4), the image data needs to be handled bit by bit. There is no conventional method which has accomplished an optimum combination infrequent accesses to the image and a large available data unit for processing, as a result of which, an engineering workstation or dedicated hardware is required to attain sufficient speed.

In comparing the precision of character string detection methods, two criteria can be considered. One is whether all character strings are detected and the other is each detected "character string" in fact such. Since spurious detection can easily be found and corrected in the course of determining the framing rectangle, and segmenting and recognising the individual characters, detection failure is considered hereinafter.

In method (1), character strings are detected from the crest and trough of a histogram, so if character strings are scattered among illustrations, there is a possibility that they cannot be found.

In the methods (2) and (4), a problem occurs if a character is in contact with some other figure. The framing rectangle of the character in contact with such figure becomes large and is judged not to be a character. A method of tracing the boundary of black pixel regions to separate the contact portions - Mukoda, Suzuki, Abe; "Separation of a Character and a Figure Using Boundary Tracing - In the Case that the Character and the Figure are in Contact"; 28th National Conference of the Information Processing Association; IN-4, 1984/3 - was also proposed, but this is a process which takes much time, and part of the figure may be cut off.

In method (4), since the frequency of a character being in contact with other figure increases due to the preprocessing, the possibility of detection failure becomes greater.

In method (3), the complexity of a string of characters of a simple structure such as numerics is reduced, so identification from other figures becomes difficult.

Accordingly, the present invention provides a method for detecting potential character string regions for character strings extending in a predetermined direction in an image obtained by reading a document, the method comprising the steps of:
(a) storing image data of the document in an image memory in such a way that the predetermined direction in the image is aligned with a main scanning direction of the image data in the memory;
(b) accessing the image memory to scan the image whilst generating position data for the black runs in each scan line;
(c) comparing the position data relating to the black runs obtained in step (b) for each pair of two adjoining scan lines, and:
   if a part of a black run which does not adjoin a black run in a preceding line exists in a succeeding line, deeming the part to be a boundary candidate of the first kind, generating position data thereof, and storing the data in a stored table;
   if a part of a black run which does not adjoin a black run in a succeeding line exists in a preceding line, deeming the part to be a boundary candidate of the second kind, generating position data thereof, and storing the data in the stored table;
(d) if the space between the boundary candidates of the same kind detected on the same line has a length not greater than a predetermined value, recognising the space to be a part of a grouped boundary candidate formed together with the two adjoining boundary candidates, the position data of the grouped boundary candidate replacing its component 'parts in the table,
   if there is a space having a length not greater than a predetermined value with respect to a sub-scanning direction between two boundary candidates of the same kind which are contiguous with respect to the main scanning direction, recognising one boundary candidate to be a part of a grouped boundary candidate formed together with the other boundary candidate, the position data of the grouped boundary candidate replacing its component parts in the table; and
(e) looking up the table to determine a pair consisting of a boundary candidate of the first kind and of the second kind, which have a part whose position in the main scanning direction is common, deeming a rectangular region whose boundaries include at least a part of each boundary candidate of the determined pair to be a character string region, and generating position data thereof.

Character strings appearing in many documents have the following properties.
1) Characters are usually written horizontally or vertically.
2) The heights of characters when horizontally written and the widths of characters when vertically written are generally uniform in a character string.
3) Above, below, on the left and right of a particular character string, there is a white run providing separation from other figure elements. A connected region of white pixels does not always exist around the character string. Accordingly, an individual character string region in an image can be approximately represented by an elongated rectangle. To detect the character string, only detection of the upper and lower sides (when horizontally written) or the left and right sides (when vertically written) of this rectangle is required.

In the preferred embodiment, the detection of the sides is performed by applying a low bus filtering to the white run, supposing an image in which the space within the character string region is filled with black pixels, and obtaining the upper and lower (left and right) boundary segment candidates of the region of connected black pixels within that image.

The present invention will be described further by way of example with reference to the aforementioned embodiment thereof as illustrated, together with contrasting examples of the prior art, in the accompanying drawings, in which:
Fig. 1 is a flowchart showing the outline of the processing of a parts number input system;
Fig. 2 is an example of drawings to be handled thereby;
Fig. 3 is a figure used to explain a grouped run-length representation;
Fig. 4 is a flowchart, in segments A and B, showing the processing that converts a line image to a grouped run-length representation;
Fig. 5 is a figure used to show that a white run sandwiched between black runs in a byte (or word) can be ignored in performing the processing;
Fig. 6 is a figure used to explain upper boundary and lower boundary candidates;
Fig. 7 is a flowchart, in segments A and B, used to explain the process of comparing grouped run-length representations to detect boundary candidates;
Figs. 8A and 8B are figures used to explain boundary candidates to be detected for two different cases;
Figs. 9A - 9C are figures used to explain the process of connecting the gaps in the vertical direction and the disconnections to the right or left of boundary candidates;
Figs. 10 and 11 are figures used to explain the manner in which a rectangle is judged to be a character string region; and
Figs. 12, 13 and 14 are figures used to explain, respectively, method (2) of the prior art methods, method (3) of the prior art methods, and run-length smearing.

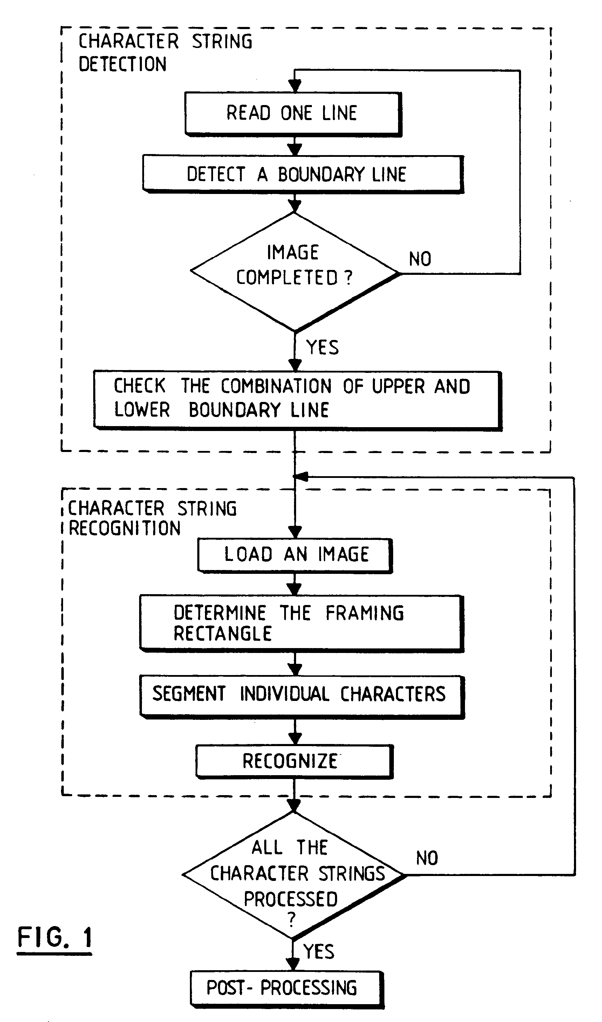

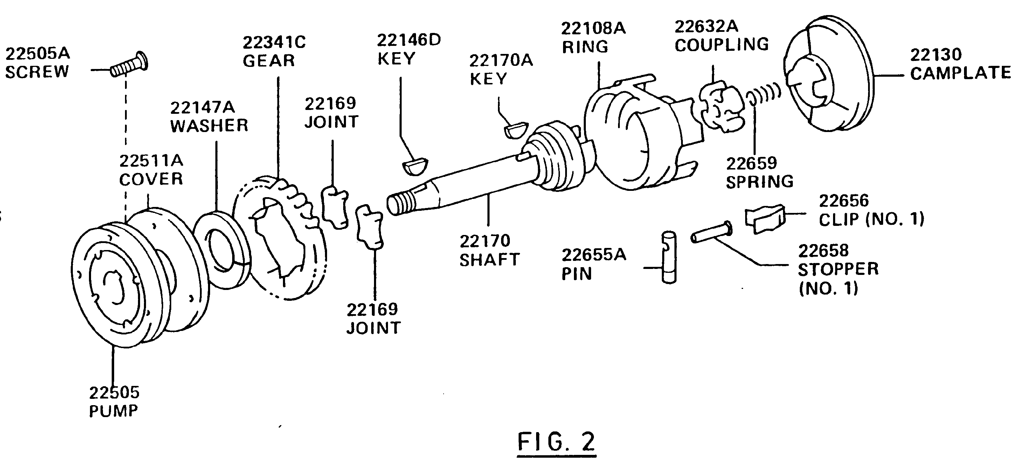

Fig. 1 shows the outline of the processing involved in detecting character strings. It is assumed that the data to be processed is provided by the input of a system intended to supply the spare part numbers of spare parts for automobiles. The system uses a scanner to read the exploded view of a mechanism from a catalogue, in which exploded view, each component part is shown with its name and its number after the manner shown in Fig. 2. Thereafter, it extracts the character strings representing names and part numbers, and thereafter converts these to character codes by the use of a character recognition program. Since it is necessary to extract character strings which are interspersed among illustrations spreading throughout a large image - say, one that needs about 640 k bytes to represent it in pixel form - this is an process which it has so far been considered difficult to perform automatically without using dedicated hardware or an engineering workstation.

An embodiment of character string detection according to the present invention is now described in its three component parts - boundary detection, character detection and further processing.

### (1) Detection of boundary line segments

The image is raster-scanned to read the image line by line and convert it to a run-length coded representation thereof. At this time, if a white run between two black runs is found to be short, the two black runs are connected to form one black run, and its position data (in this case, the starting point and length) is generated and recorded. This is called a grouped run-length representation. The subsequent processing is performed on this grouped run-length representation and no subsequent access is made to the image, per se.

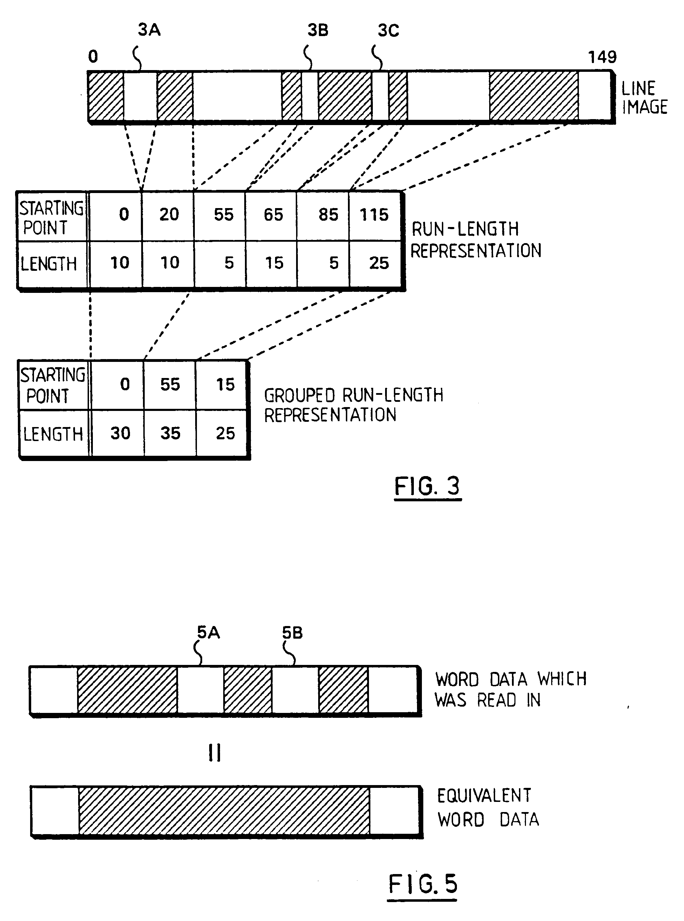

Fig. 3 exemplifies the conversion of a line image to a grouped run-length representation. Here, white runs 3A, 3B and 3C which are less than 20 pixels in length are ignored. For easy understanding, the intermediate run-length representation is shown in Fig. 3, but actually, a grouped run-length representation is made directly from the line image.

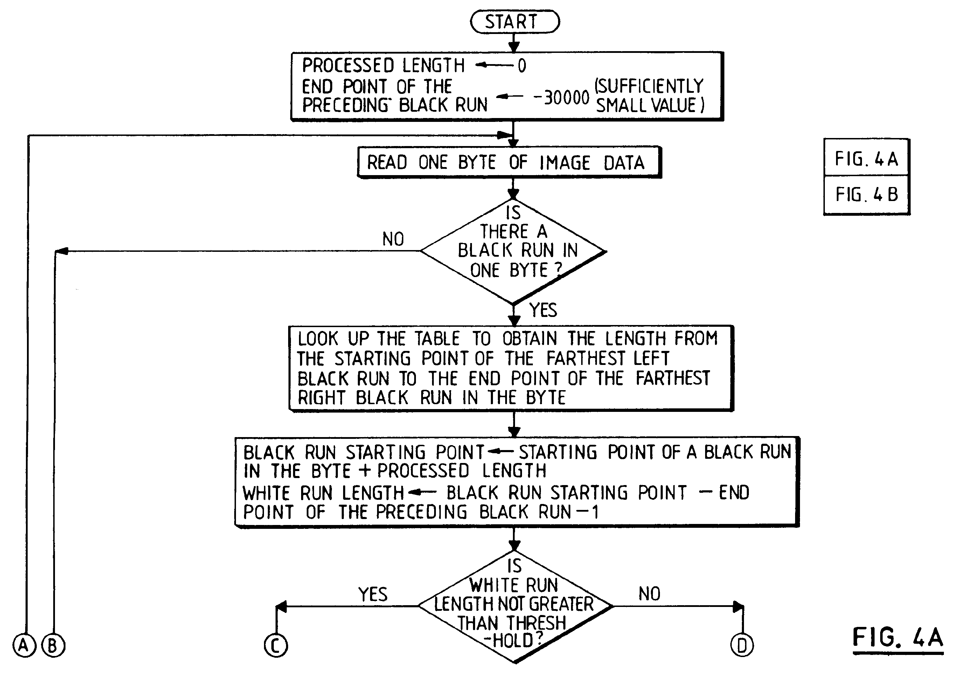

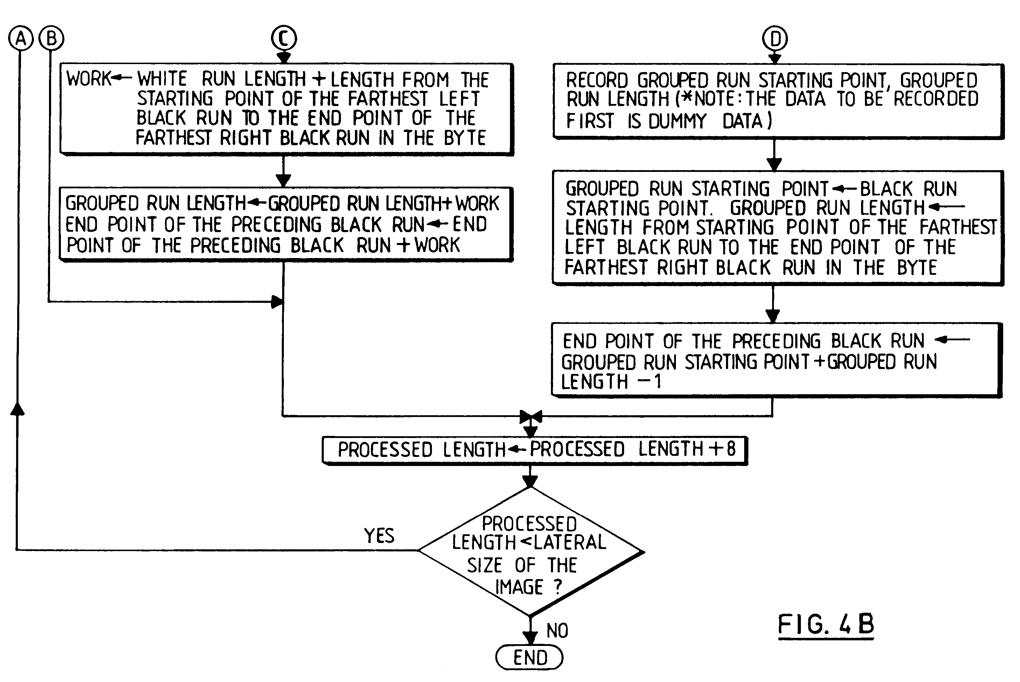

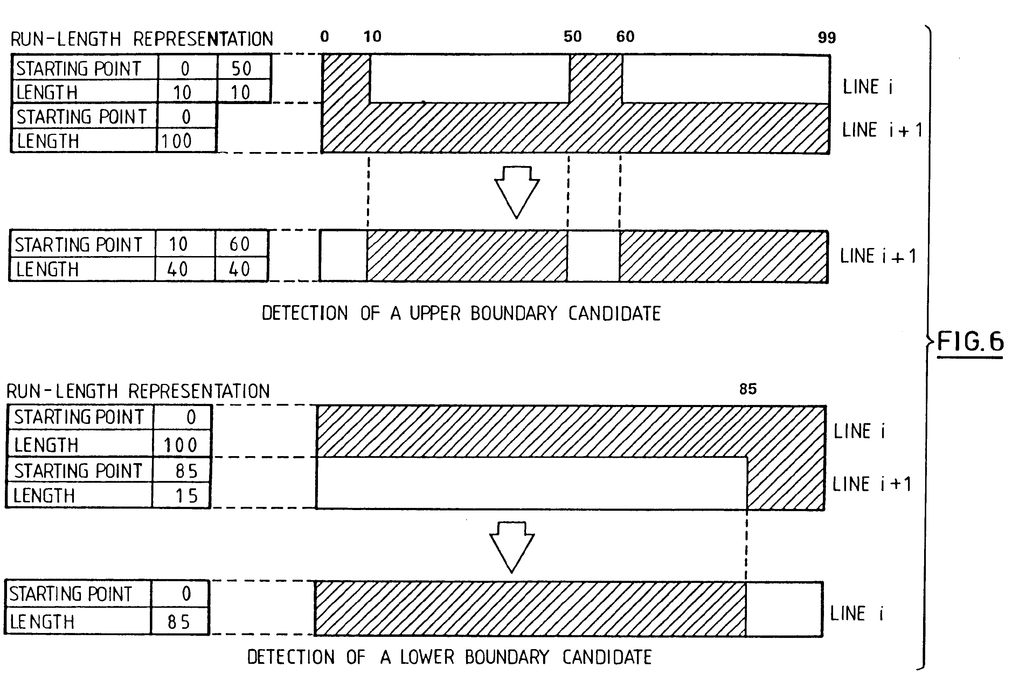

Although the conversion to a grouped run-length representation is originally a process which should be performed by checking an image dot-by-dot, in this system, byte-by-byte or word-by-word processing is made possible by use of the process shown in Fig. 4. For grouping, a white run not longer than a particular length is ignored and represented as the combination of the black runs on the left and right thereof, but its threshold is larger than a byte length (8) or word length (16). Therefore, even if data of 8-bit or 16-bit length which has been read in contains a plurality of black runs as shown in Fig. 5, they can be handled as being connected without checking lengths of the white runs 5A and 5B sandwiched between the black runs. Namely, the white runs 5A and 5B are neglected. For conversion to a run-length representation, it is sufficient that the starting point of the farthest left black run and the length from there to the end point of the farthest right black run are known. By calculating these values with respect to 2⁸ patterns for byte accessed data and 2¹⁶ patterns for word accessed data, tabulating them and referencing them, an image can be read in byte (word) by byte (word) to add the white run length at the right end of a certain byte (word) and the white run length at the left end of the next byte (word), determine whether it is a white run of a negligible length, and convert it to a grouped run-length representation.

When the image of two successive lines has been converted to a grouped run-length representation, the position data of black runs in these two lines is compared to detect the black runs which are deemed to be the upper and lower boundary candidates of a character string region (rectangle). As shown in Fig. 6, a black run with a white run above is judged to be part of an upper boundary candidate, and conversely, a black run with a white run below is judged to be part of a lower boundary candidate.

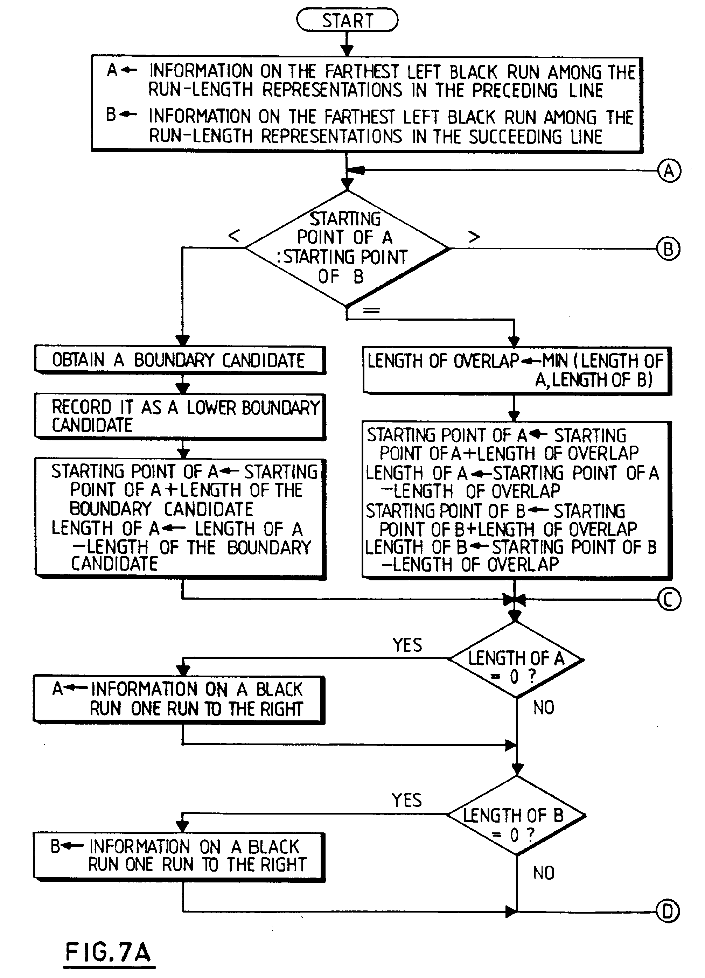

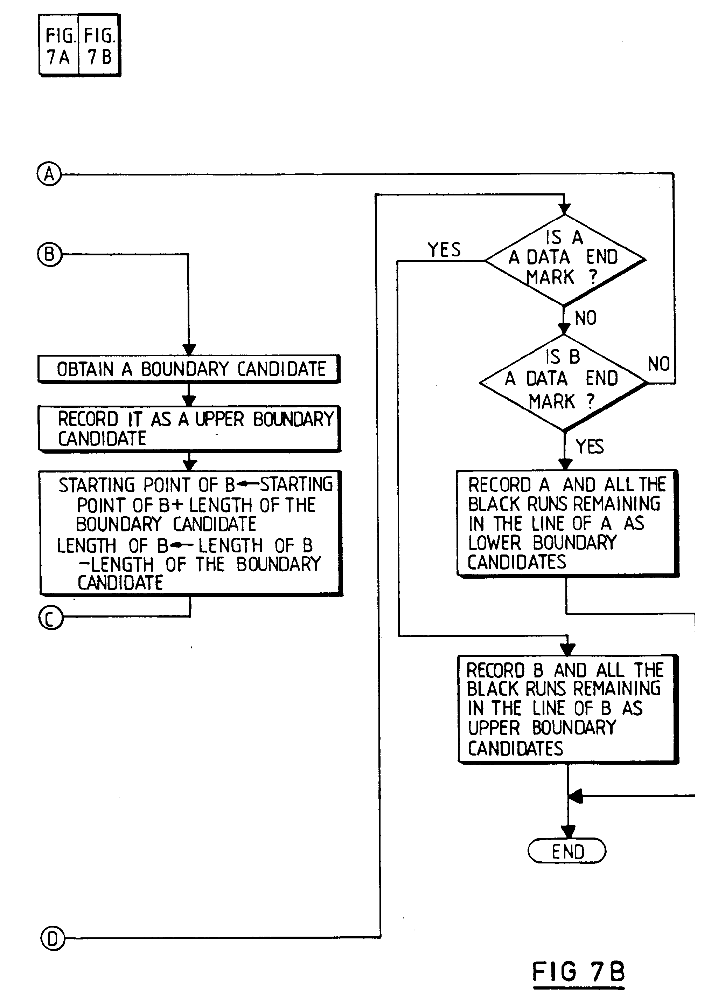

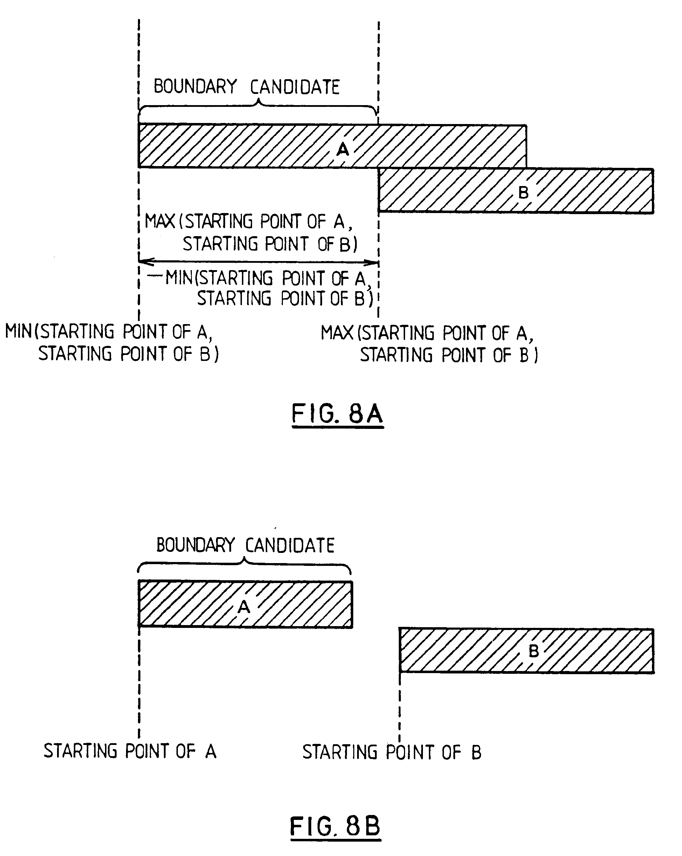

By comparing the position of the starting point and the length of a black run represented by a run-length by the series of series of steps shown in Fig. 7, the upper and lower boundary candidates can be detected. In Fig. 7, the position data of a black run is a combination of the starting point position and the length thereof and, for "obtaining a boundary candidate" in the processing in the figure, is meant calculating the starting point and length thereof. This is done if a black run A overlaps the black run B below, as shown in Fig. 8A, and a run will be obtained whose starting point is minimum(starting point of A, starting point of B) and whose length is maximum(starting point of A, starting point of B) - minimum(starting point of A, starting point of B), and if there is no overlapping between black runs A and B as shown in Fig. 8B, and the position data of that one of either run A or run B having the lower starting point value will be taken.

When the detection of boundary candidates is to be performed over a whole image, a region for recording a grouped run-length representation is prepared for two lines, and after the comparison of the data of the i-th line and the data of the i+1-th line is completed, the data of the i+1-th line is moved to the region where the data of the i-th line was located (actually, only reassignment of a pointer is sufficient), and the grouped run-length representation of the image of the i+2-th line is set in the region where the data of the i+1-th line was.

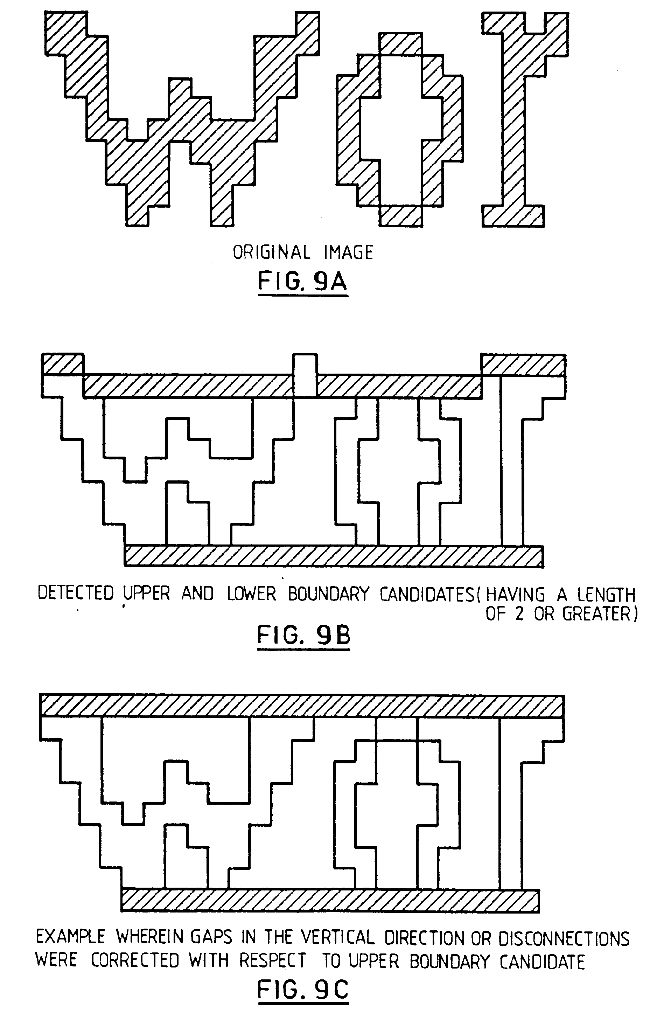

After the detection of a boundary candidate, processing to accommodate connecting gaps in the vertical direction, or disconnections to the left or right may be performed within an appropriate threshold, as shown in Figs. 9A - 9C.

### (2) Detection of character strings

All the upper boundary candidates are checked against the lower boundary candidate to see if either of the following conditions obtain:

Condition 1: A lower boundary candidate exists below the upper boundary candidate, and the difference of the Y-coordinate is within a certain range (between the minimum value and the maximum value of the character heights). Here, the Y-axis corresponds to the sub-scanning direction.

Condition 2: The starting point positions and the lengths of two boundary segment candidates are equal within a certain threshold. If these conditions are satisfied, it is judged that a character string region exists, the upper and lower ends of which are constituted by at least parts of the two boundary segment candidates respectively.

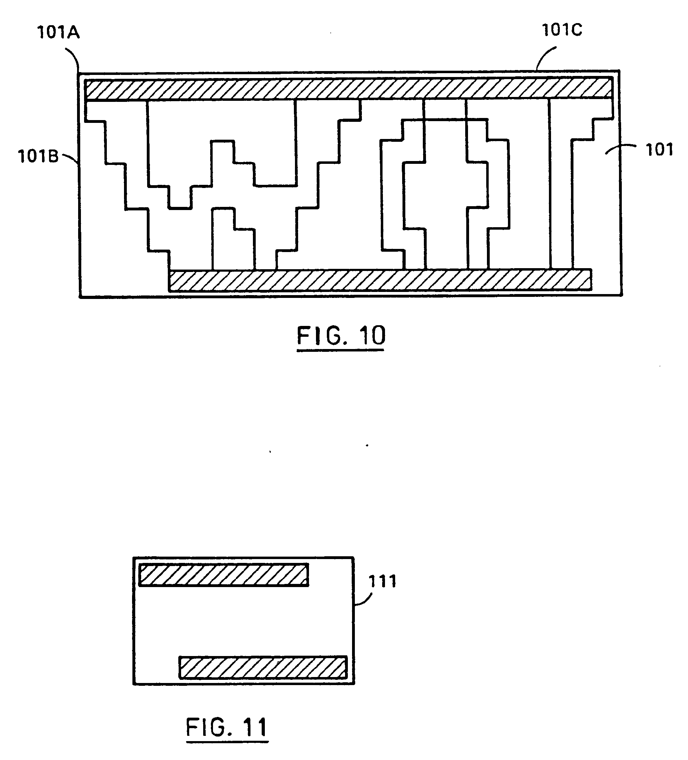

A rectangle judged to be a character string region, based on the combination of an upper segment candidate and a lower segment candidate, can be changed in any manner, depending on the implementation (threshold). In this application, using a pair of upper and lower boundary candidates as shown in Fig. 9C as an example, the starting point positions and the lengths are determined to be equal within a certain threshold, and a rectangle 101 as shown in Fig. 10 is judged to be a character string region. And, the position (XY-coordinates) of the upper left apex 101A and the lengths of two sides 101B and 101C are generated as the position data of rectangle 101. Using a pair of upper and lower boundaries as shown in Fig. 11 as an example, rectangle 111 is judged to be a character string region and its position data is generated.

A rectangle whose upper and lower ends are boundary segment candidates is not necessarily the framing rectangle of a character string, but, as described above, if only the rough position and size of the character string is known, it is easy to correct when segmenting or recognising the individual characters.

### (3) Subsequent processing

In the process of Fig. 1, the character string detecting routine scans an image once and then it sets the position data of the detected character strings in a table. The system loads the image around the character string according to the data in this table, obtains the correct framing rectangle of the character string, and performs the segmentation and recognition of the individual characters. If the character string detecting routine happens to detect part of an illustration as a character string, it is checked and rejected in the process of segmenting and recognising the characters.

Incidentally, the post-processing routine as shown in Fig. 1 is a routine which performs checking and recovery of errors using the knowledge specific to an application.

The advantages of this embodiment are as follows:
1) Processing speed
   An access to an image in this embodiment requires only one raster scan, and is made byte-by-byte or word-by-word. Therefore, a processing speed faster than that of any of the prior methods can be expected. An experimental implementation was realised using a personal computer (CPU: Intel 80286 at 8 MHz with memory wait) and language C, character string detection being performed with respect to a drawing, about 1/6 of which is shown in Fig. 2, and all the parts numbers were detected in 37 seconds (exclusive of inputting of the image).
2) Detection precision
   In this embodiment, even a character string in contact with a character string and/or figure in an illustration can be detected without any problem. Indeed there may be a character string which will be connected with the left or right adjacent figures due to ignoring of short white runs, but the upper and lower boundaries themselves will not disappear due to contact with any other figure.
3) Applicable to compressed data
   Since this embodiment performs the processing on a run-length representation and the scanning of an image requires only one raster scan, it is easy to process the data compressed by the MH method or MMR method. This is a feature which is not found in the conventional methods (1), (3) and (4).
4) Memory saving
   The work area required when scanning an image in this embodiment is only that for one line of the image and the run-length representation of two lines thereof. The boundary segment candidate recorded in the course of scanning is a result obtained by performing three stages of compression and screening, that is, conversion to a run-length representation, filling in the white run to be represented by only one black run, and leaving the run that is to become the upper or lower boundaries, so only a small main storage area is required.
5. Only character strings of specific dimensions (particularly the height) need be submitted to detection.
   In any method, once the framing rectangles of character strings have been obtained, it is possible to select the character strings of specific dimensions, but, in this embodiment, character strings beyond a specified range can be screened out during the process of detection. For this reason, the detection of a character string of a heading, for example, can be done at a higher speed than in other methods.
6. Horizontal segments can be detected.
   A horizontal segment can be detected as well as a character string. If the difference between the Y-coordinates of the upper boundary segment candidate and the lower boundary candidate is below the threshold, it is deemed to be a horizontal segment rather than a character string. Detection of an underline in contact with "y" or "q" is possible, which becomes useful information when segmenting the individual characters.

The foregoing description has been provided for use in the case where a character string consisting of a number of characters to be read extends in the lateral direction - the direction of the main scanning of a raster scan. If characters are streamed vertically in the basic document, it is sufficient merely to make the direction in which the character string extends in the image match the direction of the main scanning of the image by rotating the image in the preprocessing - hardware that will perform a rotation of 90 degrees has become available in personal computers - or to put the document into the scanner "on its side".

If one character is written a long distance apart from other characters, it can be coped with to a certain extent by adjusting the appropriate threshold value in examining the combination of an upper and a lower boundary segment candidates [portion (2) of (II)]. However, the percentage of falsely detecting figures other than characters as characters will increase.

This disclosed arrangement is disadvantageous if a document includes character strings extending in various directions, but it is very advantageous for a document including only character strings extending substantially in one direction.

Thus character strings in an image obtained by reading a document which includes only character strings extending substantially in one direction can be detected at a high speed and with a high precision and is easy to realise on a general-purpose personal computer.

## Claims

1. A method for detecting potential character string regions for character strings extending in a predetermined direction in an image obtained by reading a document, the method comprising the steps of:
(a) storing image data of the document in an image memory in such a way that the predetermined direction in the image is aligned with a main scanning direction of the image data in the memory;
(b) accessing the image memory to scan the image whilst generating position data for the black runs in each scan line;
(c) comparing the position data relating to the black runs obtained in step (b) for each pair of two adjoining scan lines, and:
if a part of a black run which does not adjoin a black run in a preceding line exists in a succeeding line, deeming the part to be a boundary candidate of the first kind, generating position data thereof, and storing the data in a stored table;
if a part of a black run which does not adjoin a black run in a succeeding line exists in a preceding line, deeming the part to be a boundary candidate of the second kind, generating position data thereof, and storing the data in the stored table;
(d) if the space between the boundary candidates of the same kind detected on the same line has a length not greater than a predetermined value, recognising the space to be a part of a grouped boundary candidate formed together with the two adjoining boundary candidates, the position data of the grouped boundary candidate replacing its component parts in the table,
if there is a space having a length not greater than a predetermined value with respect to a sub-scanning direction between two boundary candidates of the same kind which are contiguous with respect to the main scanning direction, recognising one boundary candidate to be a part of a grouped boundary candidate formed together with the other boundary candidate, the position data of the grouped boundary candidate replacing its component parts in the table; and
(e) looking up the table to determine a pair consisting of a boundary candidate of the first kind and of the second kind, which have a part whose position in the main scanning direction is common, deeming a rectangular region whose boundaries include at least a part of each boundary candidate of the determined pair to be a character string region, and generating position data thereof.

2. A method as claimed in Claim 1 wherein the position data of each black run generated in step (b) includes the starting point position and length of the black run.

3. A method as claimed in either preceding Claim wherein, in step (b), if the length of a white run sandwiched between black runs is not greater than a predetermined value, the white run is recognised to be a part of a grouped black run formed together with the two adjoining black runs, and position data of the grouped black run is generated and stored in the table.

4. A method as claimed in any preceding Claim wherein, in step (e), if the distance between the boundary candidates of the first kind and second kind of the determined pair is within a predetermined range and the gap between the two boundary candidates with respect to the main scanning direction is not greater than a predetermined value, a rectangular region whose boundaries include at least a part of each boundary candidate of the determined pair is judged to be a character string region, and position data thereof is generated.

5. A method as claimed in any preceding Claim, wherein the position data of each boundary generated in step (c) includes the starting position and length of the boundary.

6. A method as claimed in any preceding Claim, wherein the position data of a character string region generated in step (e) includes one apex and two orthogonal sides of the rectangular region deemed to be a character string region.

## Patentansprüche

1. Ein Verfahren zur Ermittlung von potentiellen Zeichenkettenbereichen für Zeichenketten, die in einer vorbestimmten Richtung verlaufen, in einem Bild, das man durch Einlesen eines Dokuments erhält, wobei das Verfahren folgende Schritte umfaßt:
(a) Speichern von Bilddaten des Dokuments in einem Bildspeicher in der Weise, daß die vorbestimmte Richtung in dem Bild mit einer Hauptabtastrichtung der Bilddaten in dem Speicher ausgerichtet wird;
(b) Zugriff auf den Bildspeicher zur Abtastung des Bildes bei gleichzeitiger Erzeugung von Positionsdaten für die schwarzen Läufe in jeder Abtastzeile;
(c) Vergleichen der Positionsdaten der in Schritt (b) für jedes Paar von zwei benachbarten Abtastzeilen erhaltenen schwarzen Läufe, und:
wenn ein Teil eines schwarzen Laufs, der nicht an einen schwarzen Lauf in einer davorliegenden Zeile anschließt, in einer Folgezeile vorhanden ist, wodurch dieser Teil als Grenzkandidat der ersten Kategorie betrachtet wird, Erzeugen von Positionsdaten für diesen und Speichern der Daten in einer gespeicherten Tabelle;
wenn ein Teil eines schwarzen Laufs, der nicht an einen schwarzen Lauf in einer Folgezeile anschließt, in einer davorliegenden Zeile vorhanden ist, wodurch dieser Teil als Grenzkandidat der zweiten Kategorie betrachtet wird, Erzeugen von Positionsdaten für diesen und Speichern der Daten in der gespeicherten Tabelle;
(d) wenn der Zwischenraum zwischen den Grenzkandidaten derselben Kategorie, der auf derselben Zeile ermittelt wird, eine Länge hat, die einen vorbestimmten Wert nicht überschreitet, Erkennen dieses Zwischenraums als Teil eines mit den beiden angrenzenden Grenzkandidaten zu einer Gruppe zusammengefaßten Grenzkandidaten, wobei die Positionsdaten des gruppierten Grenzkandidaten seine einzelnen Teile in der Tabelle ersetzen,
wenn ein Zwischenraum mit einer Länge vorhanden ist, die einen vorbestimmten Wert in Bezug auf eine Nebenabtastrichtung zwischen zwei Grenzkandidaten derselben Kategorie, die, bezogen auf die Hauptabtastrichtung, benachbart sind, nicht überschreitet, Erkennen eines Grenzkandidaten als Teil eines mit den anderen Grenzkandidaten zu einer Gruppe zusammengefaßten Grenzkandidaten, wobei die Positionsdaten des gruppierten Grenzkandidaten seine einzelnen Teile in der Tabelle ersetzen; und
(e) Nachschlagen in der Tabelle, um ein aus einem Grenzkandidaten der ersten und der zweiten Kategorie bestehendes Paar zu ermitteln, das einen Teil aufweist, dessen Position in der Hauptabtastrichtung eine gemeinsame ist, wobei ein rechteckiger Bereich, dessen Grenzen mindestens einen Teil jedes Grenzkandidaten des ermittelten Paares enthalten, als Zeichenkettenbereich betrachtet wird, und Erzeugen von Positionsdaten für diesen.

2. Ein Verfahren nach Anspruch 1, bei dem die Positionsdaten jedes in Schritt (b) generierten schwarzen Laufs die Startpunktposition und die Länge des schwarzen Laufs enthalten.

3. Eine Methode nach jedem vorangehenden Anspruch, bei der in Schritt (b), wenn die Länge eines weißen Laufs, der zwischen schwarzen Läufen eingebettet ist, einen vorbestimmten Wert nicht überschreitet, der weiße Lauf als Teil eines mit den beiden angrenzenden schwarzen Läufen zu einer Gruppe zusammengefaßten schwarzen Laufs erkannt wird, und Positionsdaten des gruppierten schwarzen Laufs erzeugt und in der Tabelle gespeichert werden.

4. Ein Verfahren nach jedem vorangehenden Anspruch, bei dem, in Schritt (e), wenn der Abstand zwischen den Grenzkandidaten der ersten Kategorie und der zweiten Kategorie des so ermittelten Paares in einem vorbestimmten Bereich liegt, und die Lücke zwischen den beiden Grenzkandidaten im Hinblick auf die Hauptabtastrichtung nicht größer als der vorbestimmte Wert ist, ein rechteckiger Bereich, dessen Grenzen mindestens einen Teil jedes Grenzkandidaten des so ermittelten Paares enthalten, als Zeichenkettenbereich eingestuft wird, und Positionsdaten hierfür erzeugt werden.

5. Ein Verfahren nach jedem vorangehenden Anspruch, bei dem die Positionsdaten jeder in Schritt (c) erzeugten Grenze die Startposition und die Länge der Grenze enthalten.

6. Ein Verfahren nach jedem vorangehenden Anspruch, bei dem die Positionsdaten eines in Schritt (e) erzeugten Zeichenkettenbereichs einen Scheitelpunkt und zwei orthogonale Seiten des rechteckigen Bereichs enthalten, der als Zeichenkettenbereich betrachtet wird.

## Revendications

1. Une méthode pour détecter des régions de chaînes de caractères potentielles pour des chaînes de caractères orientées dans une direction prédéterminée dans une image obtenue par la lecture d'un document, la méthode comprenant les étapes suivantes:
(a) l'emmagasinage de données d'images du document dans une mémoire d'images de telle manière que la direction prédéterminée dans l'image soit alignée avec une direction de balayage principale des données d'images dans la mémoire;
(b) l'accès à la mémoire d'images pour balayer l'image tout en générant des données de position pour les passages noirs de chaque ligne de balayage;
(c) la comparaison des données de position concernant les passages noirs obtenues à l'étape (b) pour chaque paire de deux lignes de balayage adjacentes, et:
- si une partie d'un passage noir qui n'est pas adjoint à un passage noir d'une ligne précédente, existe dans une ligne suivante, considérer que la partie est un candidat frontière du premier type, et emmagasiner les données dans une table mémorisée;
- si une partie d'un passage noir qui n'est pas adjoint à un passage noir d'une ligne suivante existe dans une ligne précédente, considérer que la partie est un candidat frontière du second type, générer des données de position de celle ci et emmagasiner les données dans la table mémorisée;
(d) si l'espace entre les candidats frontières du même type détectés sur la même ligne, a une longueur qui n'excède pas une valeur prédéterminée, reconnaître l'espace comme une partie d'un candidat frontière groupé formé ensemble avec les deux candidats frontières adjoints, les données de position du candidat frontière groupé remplaçant ses parties composantes dans la table,
- s'il y a un espace dont la longueur n'est pas supérieure à une valeur prédéterminée par rapport à une direction de sous-balayage entre deux candidats frontières du même type qui sont contigus par rapport à la direction de balayage principale, reconnaître un candidat frontière comme une partie d'un candidat frontière groupé formé ensemble avec l'autre candidat frontière, les données de position du candidat frontière groupé remplaçant ses parties composantes dans la table; et
(e) la consultation de la table pour déterminer une paire composée d'un candidat frontière du premier type et d'un du second type, qui comportent une partie dont la position dans la direction de balayage principale est commune, considérer une région rectangulaire dont les frontières comprennent au moins une partie de chaque candidat frontière de la paire déterminée, comme une région de chaîne de caractères et générer des données de position de celle ci.

2. Une méthode selon la revendication 1 dans laquelle les données de position de chaque passage noir générées à l'étape (b) comprennent la position du point de début et la longueur du passage noir.

3. Une méthode selon l'une des revendications précédentes dans laquelle, à l'étape (b), si la longueur d'un passage blanc en sandwich entre des passages noirs, n'est pas supérieure à une valeur prédéterminée, le passage blanc est reconnu comme une partie d'un passage noir groupé formé ensemble avec les deux passages noirs adjoints, et des données de position du passage noir groupé sont générées et emmagasinées dans la table.

4. Une méthode selon l'une des revendications précédentes, dans laquelle, à l'étape (e), si la distance entre les candidats frontières du premier type et du second type de la paire déterminée, est comprise à l'intérieur d'une plage prédéterminée et que l'intervalle entre les deux candidats frontières par rapport à la direction de balayage principale n'est pas supérieur à une valeur prédéterminée, une région rectangulaire dont les frontières comprennent au moins une partie de chaque candidat frontière de la paire déterminée, est jugée comme étant une région de chaîne de caractères et des données de position de celle ci sont générées.

5. Une méthode selon l'une quelconque des revendications précédentes, dans laquelle les données de position de chaque frontière générées à l'étape (c) comprennent la position de début et la longueur de la frontière.

6. Une méthode selon l'une quelconque des revendications précédentes, dans laquelle les données de position d'une région de chaîne de caractères générées à l'étape (e), comprennent un sommet et deux côtés orthogonaux de la région rectangulaire considérée comme une région de chaîne de caractères.
